# EUROPÄISCHE PATENTSCHRIFT

(11) **EP 3 218 980 B1**
(45) Veröffentlichungstag und Bekanntmachung des Hinweises auf die Patenterteilung: **15.05.2019**
(21) Anmeldenummer: 15700448.2
(22) Anmeldetag: 12.01.2015
(51) Int. Cl.: H02J 3/36, H02J 1/14, H02J 1/00, H02J 1/08, H02M 3/28, H02M 7/483

(54) **VERFAHREN ZUM STEUERN EINES LASTFLUSSES IN EINEM GLEICHSPANNUNGSNETZ**
CONTROL OF THE POWER TRANSMISSION IN A DC GRID
PROCÉDÉ DE TRANSMISSION À COURANT CONTINU

(43) Veröffentlichungstag der Anmeldung: 20.09.2017
(73) Patentinhaber: Siemens Aktiengesellschaft, 80333 München (DE)
(72) Erfinder: BAKRAN, Mark-Matthias, 91052 Erlangen (DE); SCHÖN, Andre, 91058 Erlangen (DE); KNAAK, Hans-Joachim, 91054 Erlangen (DE)
(86) Internationale Anmeldenummer: PCT/EP2015/050419
(87) Internationale Veröffentlichungsnummer: WO 2016/112950

(56) Entgegenhaltungen:
- WO-A1-2013/071962
- WO-A1-2013/178807
- WO-A1-2013/189525

## Beschreibung

Die Erfindung betrifft ein Verfahren zum Steuern eines Lastflusses in einem Gleichspannungsnetz. Ferner betrifft die Erfindung ein Gleichspannungsnetz mit zwei Sammelleitungen und zwei Abgangsleitungen, die eine Masche ausbildend mit den beiden Sammelleitungen verbunden sind und die jeweils einen Stromrichter zum Erzeugen einer Längsspannung umfassen.

Die internationale Patentanmeldung WO 2013/071962 A1 offenbart einen AC/DC Multizellenstromrichter mit zwei Gleichspannungsanschlüssen und einem Wechselspannungsanschluss. Der Stromrichter weist eine Mehrzahl von Teilstromrichtern auf, welche jeweils durch eine Reihenschaltung von Stromrichterzellen gebildet sind.

Aus der internationalen Patentanmeldung WO 2013/178807 A1 ist eine Lastflusssteuerung bekannt, bei der mittels einer Vollbrückenschaltung ein Kondensator in Reihe zu einer Gleichstromübertragungsleitung geschaltet werden kann. Alternativ kann der Kondensator mittels der Vollbrückenschaltung auch überbrückt werden.

In einem Gleichspannungsnetz, bei dem Abgangsleitungen eine oder mehrere Maschen ausbilden, stellen sich Lastflüsse in den einzelnen Abgangsleitungen in Abhängigkeit von deren ohmschen Widerständen ein. Dies kann unter Umständen - insbesondere wenn die Abgangsleitungen unterschiedliche Leitungslängen aufweisen - dazu führen, dass einzelne Abgangsleitungen überlastet werden, während andere Abgangsleitungen nicht ausgelastet werden.

Eine Aufgabe der Erfindung ist ein Verfahren zum Steuern eines Lastflusses in einem Gleichspannungsnetz anzugeben, welches kostengünstig realisiert werden kann.

Diese Aufgabe wird durch ein Verfahren der eingangs genannten Art gelöst, bei dem erfindungsgemäß eine erste und eine zweite Abgangsleitung des Gleichspannungsnetzes eine Masche ausbildend mit zwei Sammelleitungen des Gleichspannungsnetzes verbunden sind, mittels eines ersten Mehrstufenumrichters eine Längsspannung entlang der ersten Abgangsleitung erzeugt wird, mittels eines zweiten Mehrstufenumrichters eine Längsspannung entlang der zweiten Abgangsleitung erzeugt wird und hierdurch eine elektrische Leistung zwischen den beiden Abgangsleitungen übertragen wird.

Die Erfindung geht von der Erkenntnis aus, dass durch ein Einprägen von Längsspannungen in die einzelnen Abgangsleitungen, ein Lastfluss in der jeweiligen Abgangsleitung beeinflusst werden kann.

Als Längsspannungsquelle könnte man zum Beispiel einen DC-AC-Konverter einsetzen. Um den Lastfluss in einer Abgangsleitung zu reduzieren, könnte der DC-AC-Konverter eine Gleichspannungsleistung aus der Abgangsleitung aufnehmen, diese in eine Wechselspannungsleistung umwandeln und die Wechselspannungsleistung mithilfe eines Transformators in ein Wechselspannungsnetz übertragen. Umgekehrt könnte der DC-AC-Konverter eine Wechselspannungsleistung aus dem Wechselspannungsnetz aufnehmen, diese in eine Gleichspannungsleistung umwandeln und die Gleichspannungsleistung in die Abgangsleitung abgeben, um den Lastfluss in der Abgangsleitung zu erhöhen.

Allerdings ist die Verwendung von Transformatoren grundsätzlich mit hohen Kosten verbunden - und zwar hinsichtlich Konstruktions- und Unterhaltungskosten der Transformatoren.

Weiter geht die Erfindung von der Überlegung aus, dass bei einer Verwendung von Mehrstufenumrichtern als Längsspannungsquellen auf Transformatoren zur Übertragung einer Leistung zwischen dem Gleichspannungsnetz und einem Wechselspannungsnetz prinzipiell verzichtet werden kann. Dies kann insbesondere darauf zurückgeführt werden, dass ein Mehrstufenumrichter selber eine neutrale Leistungsbilanz bezüglich einer in eine Leitung abgegebenen Leistung mit einer ersten Frequenz und einer aus der Leitung aufgenommenen Leistung mit einer zweiten Frequenz herstellen kann. Die Verwendung von Mehrstufenumrichtern als Längsspannungsquellen ermöglicht es also, eine Leistung zwischen den beiden Abgangsleitungen auszutauschen, ohne eine Leistung in ein Wechselspannungsnetz abführen zu müssen.

Ein zusätzlicher Vorteil von Mehrstufenumrichtern ist, dass sie aufgrund ihres modularen Aufbaus einfach skalierbar sind. Das heißt, ein Mehrstufenumrichter kann - insbesondere hinsichtlich seiner Modulanzahl - aufwandsgünstig derart ausgestaltet werden, dass er dazu in der Lage ist, eine für eine vorgegebene Anwendung maximal erforderliche Längsspannung zu liefern.

Als Gleichspannungsnetz kann ein System aufgefasst werden, welches mehrere Leitungen zur Versorgung elektrischer Verbraucher mit Strom, insbesondere mit Gleichstrom, umfasst. Die Leitungen des Gleichspannungsnetzes können netzartig verzweigt sein. Ferner kann das Gleichspannungsnetz unter anderem ein Schaltwerk, ein Umspannwerk und/oder ein Kraftwerk umfassen.

Eine Leitung ist zweckmäßigerweise ein einzelnes Leitungselement zum Leiten eines elektrischen Stroms oder ein System, welches mehrere mittelbar oder unmittelbar miteinander verbundene Leitungselemente zum Leiten eines elektrischen Stroms umfasst.

Unter einer Längsspannung kann eine Spannung verstanden werden, die entlang einer Stromleitung oder entlang eines Abschnitts einer Stromleitung anliegt. Insbesondere kann eine Längsspannung eine Spannung zwischen zwei Anschlüssen eines Mehrstufenumrichters sein.

Weiterhin ist der Begriff "verbunden" vorliegend als elektrisch leitend verbunden auffassbar. Zudem kann sich der Begriff auf eine mittelbare oder eine unmittelbare Verbindung zweier Elemente beziehen.

Es ist es vorteilhaft, wenn die mittels der Mehrstufenumrichter erzeugten Längsspannungen jeweils einen Gleichspannungsanteil aufweisen. Darüber hinaus ist es vorteilhaft, wenn die mittels der Mehrstufenumrichter erzeugten Längsspannungen jeweils einen Wechselspannungsanteil aufweisen.

Die vom jeweiligen Mehrstufenumrichter erzeugte Gleichspannung kann der von demselben Mehrstufenumrichter erzeugten Wechselspannung entgegengerichtet sein oder eine gleiche Orientierung wie die Wechselspannung aufweisen.

Erfindungsgemäß ist die zwischen den beiden Abgangsleitungen übertragene Leistung eine Wechselspannungsleistung. Die Wechselspannungsleistung kann zum Herstellen einer vorgegebenen Leistungsbilanz zwischen den Abgangsleitungen verwendet werden. Wohingegen eine über die jeweilige Abgangsleitung übertragene Gleichspannungsleistung weiterhin als Nutzleistung verwendet werden kann.

Der zweite Mehrstufenumrichter nimmt eine Gleichspannungsleistung aus der zweiten Abgangsleitung auf. Der zweite Mehrstufenumrichter gibt eine Wechselspannungsleistung in die zweite Abgangsleitung ab. Diese Wechselspannungsleistung wird zur ersten Abgangsleitung übertragen. Der erste Mehrstufenumrichter nimmt die Wechselspannungsleistung aus der ersten Abgangsleitung auf. Der erste Mehrstufenumrichter gibt eine Gleichspannungsleistung in die erste Abgangsleitung ab. Hierdurch kann erreicht werden, dass ein Gleichspannungslastfluss in der zweiten Abgangsleitung reduziert wird, während ein Gleichspannungslastfluss in der ersten Abgangsleitung erhöht wird.

Sinnvollerweise wandelt der zweite Mehrstufenumrichter die von ihm aus der zweiten Abgangsleitung aufgenommene Gleichspannungsleistung in die Wechselspannungsleistung um, die er in die zweite Abgangsleitung abgibt. Außerdem ist es sinnvoll, wenn der erste Mehrstufenumrichter die von ihm aus der ersten Abgangsleitung aufgenommene Wechselspannungsleistung in die Gleichspannungsleistung umwandelt, die er in die erste Abgangsleitung abgibt.

Es ist zweckmäßig, wenn die vom zweiten Mehrstufenumrichter aufgenommene Gleichspannungsleistung gleich einem Wirkleistungsanteil der vom zweiten Mehrstufenumrichter abgegebenen Wechselspannungsleistung ist. In analoger Weise ist es zweckmäßig, wenn ein Wirkleistungsanteil der vom ersten Mehrstufenumrichter aufgenommenen Wechselspannungsleistung gleich der vom ersten Mehrstufenumrichter abgegebenen Gleichspannungsleistung ist. Dadurch kann eine neutrale Leistungsbilanz der Mehrstufenumrichter erreicht werden. Das heißt, es kann erreicht werden, dass die Mehrstufenumrichter über eine vorgegebene Zeitdauer gemittelt genauso viel Energie aufnehmen wie sie abgeben.

Erfindungsgemäß ist eine Verbindungsleitung vorgesehen, durch welche die beiden Abgangsleitungen miteinander verbunden sind. Erfindungsgemäß fließt ein Wechselstrom durch die Verbindungsleitung, insbesondere von einer der beiden Abgangsleitungen zur anderen der beiden Abgangsleitungen.

Entlang der Verbindungsleitung wird bevorzugterweise eine Gleichspannung erzeugt, erfindungsgemäß solch eine Gleichspannung, dass ein Gleichstromfluss durch die Verbindungsleitung verhindert wird. Diese Gleichspannung wird erfindungsgemäß mithilfe eines Energiespeichers, insbesondere eines Kondensators, und/oder mithilfe eines Mehrstufenumrichters erzeugt.

Grundsätzlich ist es aber auch möglich, dass entlang der Verbindungsleitung solch eine Gleichspannung erzeugt wird, dass ein Gleichstromfluss durch die Verbindungsleitung zugelassen wird. Zweckmäßigerweise wird in diesem Fall eine Stromstärke eines durch die Verbindungsleitung fließenden Gleichstroms durch die Gleichspannung auf einen vorgegebenen Höchstwert begrenzt. Sinnvollerweise ist der vorgegebene Höchstwert ein Bruchteil einer Stromstärke eines durch die erste oder zweite Abgangsleitung fließenden Gleichstroms.

Eine bevorzugte Ausführung der Erfindung sieht vor, dass unter Verwendung der Mehrstufenumrichter ein Kreisstrom erzeugt wird. Sinnvollerweise ist der Kreisstrom ein Wechselstrom.

Der Kreisstrom kann insbesondere der zuvor erwähnte Wechselstrom sein, der durch die Verbindungsleitung fließt.

Vorteilhafterweise ergibt sich jede der beiden Längsspannungen aus einer Überlagerung mehrerer Teillängsspannungen. Die einzelnen Teillängsspannungen werden zweckmäßigerweise von unterschiedlichen Submodulen des jeweiligen Mehrstufenumrichters erzeugt.

Eine Veränderung der vom ersten Mehrstufenumrichter erzeugten Längsspannung kann z.B. dadurch erreicht werden, dass verändert wird, wie viele Submodule des ersten Mehrstufenumrichters eine Teillängsspannung erzeugen, aus welcher sich die vom ersten Mehrstufenumrichter erzeugte Längsspannung zusammensetzt. In analoger Weise kann eine Veränderung der vom zweiten Mehrstufenumrichter erzeugten Längsspannung z.B. dadurch erreicht werden, dass verändert wird, wie viele Submodule des zweiten Mehrstufenumrichters eine Teillängsspannung erzeugen, aus welcher sich die vom zweiten Mehrstufenumrichter erzeugte Längsspannung zusammensetzt. Auf diese Weise kann die jeweilige Längsspannung insbesondere schrittweise verändert werden.

Unter einer Veränderung der jeweiligen Längsspannung kann eine Veränderung, d.h. Erhöhung oder Verringerung, eines Effektivwerts oder eines Betrags der Längsspannung verstanden werden. Bei einer Veränderung der jeweiligen Längsspannung ist es möglich, dass nur der Gleichspannungsanteil der Längsspannung, nur der Wechselspannungsanteil der Längsspannung oder sowohl der Gleichspannungs- als auch der Wechselspannungsanteil verändert wird.

In einer vorteilhaften Weiterbildung der Erfindung wird eine Stromstärke eines durch eine der Sammelleitungen fließenden Wechselstroms mittels einer Filterdrossel reduziert. Die Filterdrossel kann ein Bestandteil einer der Sammelleitungen oder einer der Abgangsleitungen sein. Ferner kann sich die Reduktion der Stromstärke in diesem Kontext darauf beziehen, dass die Stromstärke des Wechselstroms kleiner gehalten wird, als eine Stromstärke, die ein durch die Sammelleitung fließender Wechselstrom ohne Einwirkung der Filterdrossel hätte.

Eine weitere vorteilhafte Weiterbildung der Erfindung sieht vor, dass eine Wechselspannung erzeugt wird, mittels welcher ein Wechselstromfluss durch eine der Sammelleitungen verhindert wird. Vorzugsweise wird diese Wechselspannung von einem weiteren Mehrstufenumrichter erzeugt.

Der weitere Mehrstufenumrichter kann ein Bestandteil einer der Sammelleitungen sein. In solch einem Fall erzeugt der weitere Mehrstufenumrichter besagte Wechselspannung sinnvollerweise entlang dieser Sammelleitung. Alternativ kann der weitere Mehrstufenumrichter ein Bestandteil einer der Abgangsleitungen sein. In diesem Fall erzeugt der weitere Mehrstufenumrichter besagte Wechselspannung sinnvollerweise entlang dieser Abgangsleitung.

Prinzipiell ist es aber auch möglich, dass solch eine Wechselspannung erzeugt wird, dass ein Wechselstromfluss durch eine oder beide der Sammelleitungen zugelassen wird. Zweckmäßigerweise wird in diesem Fall eine Stromstärke eines durch die Sammelleitung fließenden Wechselstroms durch die Wechselspannung auf einen vorgegebenen Höchstwert begrenzt. Sinnvollerweise ist dieser vorgegebene Höchstwert ein Bruchteil einer Stromstärke eines durch die erste oder zweite Abgangsleitung fließenden Wechselstroms.

Bei einem Gleichspannungsnetz der eingangs genannten Art wird ein kostengünstiges Steuern eines Lastflusses erfindungsgemäß dadurch ermöglicht, dass die Stromrichter der Abgangsleitungen Mehrstufenumrichter sind.

Dieses Gleichspannungsnetz kann insbesondere zur Durchführung des oben beschriebenen Verfahrens eingerichtet sein.

Die einzelnen Abgangsleitungen des Gleichspannungsnetzes können jeweils mit einem elektrischen Verbraucher verbunden sein und/oder jeweils einen elektrischen Verbraucher als Leitungsbestandteil umfassen. Insbesondere können die Abgangsleitungen jeweils mit unterschiedlichen elektrischen Verbrauchern verbunden sein.

Des Weiteren sind die beiden Sammelleitungen des Gleichspannungsnetzes sinnvollerweise durch jede der beiden Abgangsleitungen miteinander verbunden. Ferner kann eine der beiden Sammelleitungen mit einer Spannungsquelle, insbesondere einer Gleichspannungsquelle, verbunden sein. Die andere der beiden Sammelleitungen kann mit einem elektrischen Verbraucher verbunden sein.

Zweckmäßigerweise sind die Mehrstufenumrichter der beiden Abgangsleitungen zueinander identisch ausgestaltet. Grundsätzlich ist aber auch möglich, dass die Mehrstufenumrichter verschiedenartig ausgestaltet sind.

Die Mehrstufenumrichter können jeweils mehrere in Reihe geschaltete Submodule umfassen. Weiterhin ist es zweckmäßig, wenn jedes der Submodule einen Energiespeicher, insbesondere einen Kondensator oder eine Akkumulatorzelle, aufweist. Insbesondere können die Submodule jeweils eine Reihenschaltung aus mehreren Energiespeichern umfassen.

Ferner ist es zweckmäßig, wenn jedes der Submodule zumindest zwei steuerbare Schaltelemente, insbesondere zumindest zwei in Reihe geschaltete steuerbare Schaltelemente, aufweist. Bei dem jeweiligen Schaltelement kann es z.B. um einen Transistor, insbesondere einen Bipolartransistor mit isolierter Gate-Elektrode (englisch: insulated-gate bipolar transistor, kurz: IGBT) oder einen Metall-Oxid-Halbleiter-Feldeffekttransistor (englisch: metal-oxide-semiconductor field-effect transistor, kurz: MOSFET), handeln. Alternativ kann das jeweilige Schaltelement ein Thyristor, insbesondere ein GTO-Thyristor (englisch: gate turn-off thyristor), sein.

Außerdem ist es zweckmäßig, wenn jedes der Submodule zumindest zwei Dioden aufweist. Vorzugsweise ist jede der Dioden antiparallel zu einem der steuerbaren Schaltelemente des jeweiligen Submoduls geschaltet.

Die Submodule können insbesondere jeweils als Vollbrückenmodul oder als Halbbrückenmodul ausgestaltet sein. Ein als Halbbrückenmodul ausgestaltetes Submodul ist kosten- und/oder aufwandsgünstiger herstellbar als ein als Vollbrückenmodul ausgestaltetes Submodul, da ein Halbbrückenmodul weniger Bauteile umfasst als ein Vollbrückenmodul. Dafür ist ein Vorteil eines als Vollbrückenmodul ausgestalteten Submoduls, dass ein solches Submodul bidirektional betreibbar ist. Das heißt, dass ein als Vollbrückenmodul ausgestalteten Submodul eine Gleichspannung erzeugen kann, die in eine erste Richtung gerichtet ist. Zudem kann ein als Vollbrückenmodul ausgestalteten Submodul eine Gleichspannung erzeugen, die in eine zweite Richtung gerichtet ist, welche der ersten Richtung entgegengerichtet ist.

Sinnvollerweise sind alle Submodule des jeweiligen Mehrstufenumrichters zueinander identisch ausgestaltet. Prinzipiell ist aber auch möglich, dass sich zumindest eins der Submodule von den übrigen Submodulen des Mehrstufenumrichters unterscheidet.

Ferner weist das Gleichspannungsnetz sinnvollerweise eine Verbindungsleitung auf. Die beiden Abgangsleitungen sind erfindungsgemäß durch die Verbindungsleitung miteinander verbunden. Dabei ist die Verbindungsleitung an beide Abgangsleitungen angeschlossen.

Erfindungsgemäß ist die Verbindungsleitung dazu eingerichtet, einen Wechselstrom von einer der beiden Abgangsleitungen zur anderen der beiden Abgangsleitungen zu leiten. Insbesondere kann die Verbindungsleitung derart konfiguriert sein, dass sie effektiv als Wechselstromkurzschluss aufgefasst werden kann.

Darüber hinaus ist die Verbindungsleitung dazu eingerichtet, einen Gleichstromfluss zwischen den beiden Abgangsleitungen zu verhindern.

Weiterhin kann die Verbindungsleitung einen Energiespeicher, insbesondere einen Kondensator, und/oder eine Drosselspule umfassen. Bevorzugterweise umfasst die Verbindungsleitung eine Reihenschaltung aus einem Kondensator und einer Drosselspule.

Zweckmäßigerweise bildet die Reihenschaltung aus dem Kondensator und der Drosselspule einen Saugkreis aus. Hierbei ist es sinnvoll, wenn eine Resonanzfrequenz des Saugkreises gleich einer Frequenz eines Wechselstroms ist, der dazu vorgesehen ist, durch die Verbindungsleitung zu fließen. Weiter ist es sinnvoll, wenn beim Betrieb des Gleichspannungsnetzes am Kondensator eine Gleichspannung anliegt, mittels welcher ein Gleichstromfluss durch die Verbindungsleitung verhindert wird.

Außerdem kann die Verbindungsleitung einen Mehrstufenumrichter, insbesondere einen Mehrstufenumrichter mit mehreren in Reihe geschalteten Submodulen, umfassen. Dieser Mehrstufenumrichter kann identisch zu den Mehrstufenumrichtern der Abgangsleitungen ausgestaltet sein. Es ist allerdings auch möglich, dass sich dieser Mehrstufenumrichter von den Mehrstufenumrichtern der Abgangsleitungen in einem oder mehreren Merkmalen unterscheidet.

Ferner kann der zuvor erwähnte Kondensator und/oder die zuvor erwähnte Drosselspule mit dem Mehrstufenumrichter der Verbindungsleitung in Reihe geschaltet sein.

Weiterhin ist es zweckmäßig, wenn beim Betrieb des Gleichspannungsnetzes vom Mehrstufenumrichter der Verbindungsleitung eine Gleichspannung erzeugt wird, mittels welcher ein Gleichstromfluss durch die Verbindungsleitung verhindert wird.

Eine der beiden Abgangsleitungen kann eine Filterdrossel und/oder einen zusätzlichen Mehrstufenumrichter, insbesondere einen Mehrstufenumrichter mit mehreren in Reihe geschalteten Submodulen, umfassen. Dieser Mehrstufenumrichter kann identisch zu den erstgenannten Mehrstufenumrichtern der Abgangsleitungen ausgestaltet sein. Es ist allerdings auch möglich, dass sich dieser Mehrstufenumrichter von den erstgenannten Mehrstufenumrichtern der Abgangsleitungen in einem oder mehreren Merkmalen unterscheidet. In bevorzugter Weise umfasst jede der beiden Abgangsleitungen eine Filterdrossel und/oder einen solchen zusätzlichen Mehrstufenumrichter.

Die durch die beiden Abgangsleitungen ausgebildete Masche kann durch die Verbindungsleitung in eine erste und eine zweite Teilmasche unterteilt sein. Dabei können die Mehrstufenumrichter der Abgangsleitungen Bestandteile der ersten Teilmasche sein. Die Filterdrossel bzw. der zusätzliche Mehrstufenumrichter der jeweiligen Abgangsleitung kann ein Bestandteil der zweiten Teilmasche sein.

Des Weiteren kann eine der beiden Sammelleitungen eine Filterdrossel und/oder einen Mehrstufenumrichter, insbesondere einen Mehrstufenumrichter mit mehreren in Reihe geschalteten Submodulen, umfassen. Weiterhin können beide Sammelleitungen eine Filterdrossel und/oder einen solchen Mehrstufenumrichter aufweisen.

Darüber hinaus kann das Gleichspannungsnetz eine Steuereinheit zum Ansteuern der Mehrstufenumrichter, insbesondere zum Steuern von Schaltzuständen der Schaltelemente der Mehrstufenumrichter, aufweisen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Gleichspannungsnetz kombinierbar. So sind Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden. Der Schutzumfang der vorliegenden Erfindung wird durch die angefügten Ansprüche definiert.

Es zeigen:
- FIG 1: ein Gleichspannungsnetz mit zwei Abgangsleitungen, die eine Masche ausbildend mit zwei Sammelleitungen verbunden sind und die jeweils einen Mehrstufenumrichter mit mehreren in Reihe geschalteten Submodulen umfassen;
- FIG 2: eine mögliche Ausgestaltung eines der Submodule aus FIG 1;
- FIG 3: eine alternative Ausgestaltung eines der Submodule aus FIG 1;
- FIG 4: ein anderes Gleichspannungsnetz, aufweisend zwei Abgangsleitungen, die jeweils zwei Mehrstufenumrichter umfassen;
- FIG 5: noch ein anderes Gleichspannungsnetz, aufweisend zwei Abgangsleitungen, die eine Masche ausbildend mit zwei Sammelleitungen verbunden sind, wobei eine der beiden Sammelleitungen eine Filterdrossel aufweist;
- FIG 6: ein weiteres Gleichspannungsnetz mit zwei Abgangsleitungen, die jeweils eine Filterdrossel aufweisen;
- FIG 7: noch ein weiteres Gleichspannungsnetz mit drei Abgangsleitungen, die zwei Maschen ausbilden;
- FIG 8: eine erste alternative Ausgestaltung einer Verbindungsleitung zum Verbinden zweier Abgangsleitungen eines Gleichspannungsnetzes; und
- FIG 9: eine zweite alternative Ausgestaltung einer Verbindungsleitung zum Verbinden zweier Abgangsleitungen eines Gleichspannungsnetzes.

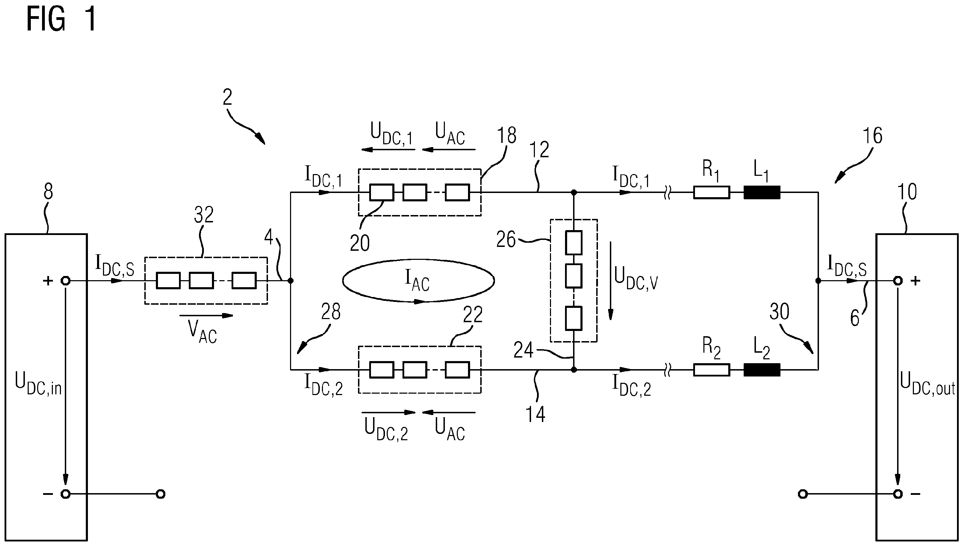

FIG 1 zeigt ein Prinzipschaltbild eines Gleichspannungsnetzes 2. Das Gleichspannungsnetz 2 umfasst eine erste Sammelleitung 4 und eine zweite Sammelleitung 6. Die erste Sammelleitung 4 ist mit einer Gleichspannungsquelle 8 verbunden, welche eine Gleichspannung U_{DC,in} in das Gleichspannungsnetz 2 einspeist. Dagegen ist die zweite Sammelleitung 6 mit einem elektrischen Verbraucher 10 verbunden, über welchem eine Gleichspannung U_{DC,out} abfällt.

Ferner umfasst das Gleichspannungsnetz 2 eine erste Abgangsleitung 12 mit einem ohmschen Widerstand R₁ und einer Induktivität L₁. Zudem umfasst das Gleichspannungsnetz 2 eine zweite Abgangsleitung 14 mit einem ohmschen Widerstand R₂ und einer Induktivität L₂.

Die beiden Abgangsleitungen 12, 14 sind eine Masche 16 ausbildend mit den beiden Sammelleitungen 4, 6 verbunden. Außerdem weist die erste Abgangsleitung 12 einen Stromrichter auf, der als Mehrstufenumrichter 18 ausgestaltet ist. Ebenso weist die zweite Abgangsleitung 14 einen Stromrichter auf, der als Mehrstufenumrichter 22 ausgestaltet ist. Die Mehrstufenumrichter 18, 22 der Abgangsleitungen 12, 14 sind identisch zueinander ausgestaltet und umfassen jeweils mehrere in Reihe geschaltete Submodule 20.

Darüber hinaus weist das Gleichspannungsnetz 2 eine an die beiden Abgangsleitungen 12, 14 angeschlossene Verbindungsleitung 24 auf, durch welche die beiden Abgangsleitungen 12, 14 miteinander verbunden sind. Die Verbindungsleitung 24 umfasst ebenfalls einen Mehrstufenumrichter 26 mit mehreren in Reihe schalteten Submodulen 20. Des Weiteren unterteilt die Verbindungsleitung 24 die Masche 16 in eine erste Teilmasche 28 und eine zweite Teilmasche 30. Dabei sind die zuvor erwähnten Mehrstufenumrichter 18, 22 der Abgangsleitungen 12, 14 Bestandteile der ersten Teilmasche 28.

Ferner ist die Verbindungsleitung 24 dazu eingerichtet, einen Wechselstrom von einer der beiden Abgangsleitungen 12, 14 zur anderen der beiden Abgangsleitungen 12, 14 zu leiten. Insbesondere kann die Verbindungsleitung 24 effektiv als Wechselstromkurzschluss aufgefasst werden. Außerdem ist die Verbindungsleitung 24 dazu eingerichtet, unter Verwendung ihres Mehrstufenumrichters 26 einen Gleichstromfluss zwischen den beiden Abgangsleitungen 12, 14 zu verhindern.

Weiterhin umfasst die erste Sammelleitung 4 einen weiteren Mehrstufenumrichter 32 mit mehreren in Reihe geschalteten Submodulen 20. Alternativ oder zusätzlich könnte die zweite Sammelleitung 6 einen solchen weiteren Mehrstufenumrichter aufweisen.

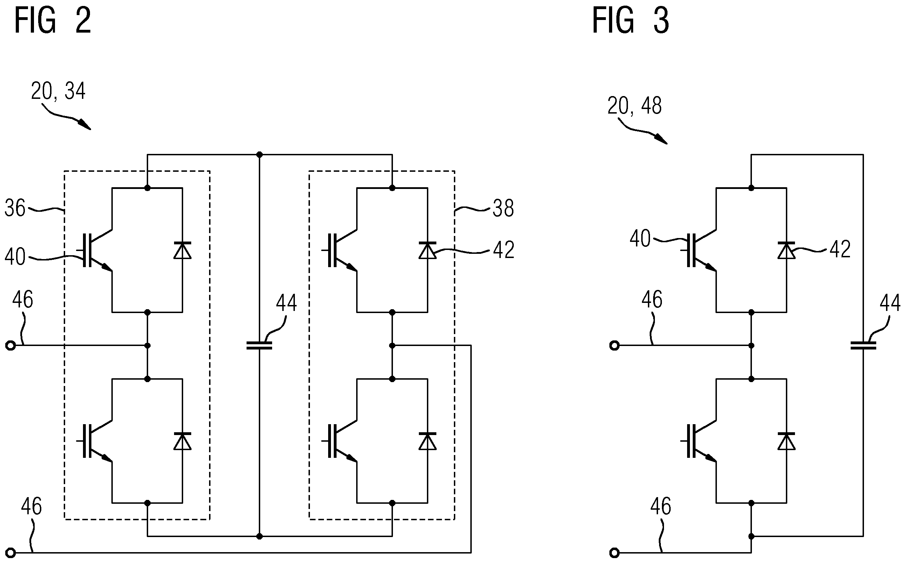

Im vorliegenden Ausführungsbeispiel sind die Submodule 20 aller zuvor beschriebenen Submodule 20 identisch zueinander ausgestaltet. Eine mögliche Ausgestaltung der Submodule 20 des Gleichspannungsnetzes 2 ist in FIG 2 exemplarisch für eines der Submodule 20 dargestellt. In FIG 3 ist eine alternative Ausgestaltung der Submodule 20 des Gleichspannungsnetzes 2 exemplarisch für eines der Submodule 20 dargestellt.

Durch die erste Sammelleitung 4 fließt ein Gleichstrom I_{DC,S} von der Gleichspannungsquelle 8 in Richtung des elektrischen Verbrauchers 10. Der Gleichstrom I_{DC,S} teilt sich in einen durch die erste Abgangsleitung 12 fließenden Gleichstrom I_{DC,1} und einen durch die zweite Abgangsleitung 14 fließenden Gleichstrom I_{DC,2}, deren Stromstärkeverhältnis vom ohmschen Widerstand der jeweiligen Abgangsleitung 12, 14 abhängt. Dabei entspricht der durch die erste Sammelleitung 4 fließende Gleichstrom I_{DC,S} einer Summe aus den beiden letztgenannten Strömen I_{DC,1}, I_{DC,2}.

In der zweiten Sammelleitung 6 fließen die durch die Abgangsleitungen 12, 14 fließenden Ströme I_{DC,1}, I_{DC,2} zusammen, sodass in Summe durch die zweite Sammelleitung 6 derselbe Gleichstrom I_{DC,S} fließt wie durch die erste Sammelleitung 4.

Mittels des Mehrstufenumrichters 18 der ersten Abgangsleitung 12 wird eine Längsspannung entlang der ersten Abgangsleitung 12 erzeugt, während wird mittels des Mehrstufenumrichters 22 der zweiten Abgangsleitung 14 eine Längsspannung entlang der zweiten Abgangsleitung 14 erzeugt wird. Jede dieser beiden Längsspannungen ergibt sich aus einer Überlagerung mehrerer Teillängsspannungen, die von den unterschiedlichen Submodulen 20 des jeweiligen Mehrstufenumrichters 18, 22 erzeugt werden.

Ferner weisen die mittels der Mehrstufenumrichter 18, 22 der Abgangsleitungen 12, 14 erzeugten Längsspannungen jeweils einen Gleichspannungsanteil und einen Wechselspannungsanteil aufweisen. Der Mehrstufenumrichter 18 der ersten Abgangsleitung 12 erzeugt eine Gleichspannung U_{DC,1} und eine Wechselspannung U_{AC} entlang der ersten Abgangsleitung 12. Der Mehrstufenumrichter 22 der zweiten Abgangsleitung 14 erzeugt eine weitere Gleichspannung U_{DC,2} entlang der zweiten Abgangsleitung 14. Zudem erzeugt der Mehrstufenumrichter 22 der zweiten Abgangsleitung 14 eine Wechselspannung U_{AC} entlang der zweiten Abgangsleitung 14, die einen gleichen Betrag wie die vom Mehrstufenumrichter 18 der ersten Abgangsleitung 12 erzeugte Wechselspannung U_{AC} aufweist.

Mithilfe der Mehrstufenumrichter 18, 22 der Abgangsleitungen 12, 14 wird ein Kreisstrom I_{AC} erzeugt, welcher ein Wechselstrom ist. Dieser Kreisstrom I_{AC} zirkuliert innerhalb der ersten Teilmasche 28. Im vorliegenden Ausführungsbeispiel fließt der Kreisstrom I_{AC} von der ersten Abgangsleitung 12 durch die Verbindungsleitung 24 zur zweiten Abgangsleitung 14 und von Letzterer wieder zurück zur ersten Abgangsleitung 12.

Im vorliegenden Beispiel ist die vom Mehrstufenumrichter 18 der ersten Abgangsleitung 12 erzeugte Wechselspannung U_{AC} in Flussrichtung des Kreisstroms I_{AC} gerichtet. Dagegen ist die vom Mehrstufenumrichter 22 der zweiten Abgangsleitung 14 erzeugte Wechselspannung U_{AC} dem Kreisstrom I_{AC} entgegengerichtet.

Ferner ist die vom Mehrstufenumrichter 18 der ersten Abgangsleitung 12 erzeugte Gleichspannung U_{DC,1} dem durch die erste Abgangsleitung 12 fließenden Gleichstrom I_{DC,1} entgegengerichtet. Die vom Mehrstufenumrichter 22 der zweiten Abgangsleitung 14 erzeugte Gleichspannung U_{DC,2} ist in Flussrichtung des durch die zweite Abgangsleitung 14 fließenden Gleichstroms I_{DC,2} gerichtet.

Dadurch, dass der Mehrstufenumrichter 22 der zweiten Abgangsleitung 14 einen Gleichspannungsabfall U_{DC,2} in Flussrichtung des durch die zweite Abgangsleitung 14 fließenden Gleichstroms I_{DC,2} erzeugt, nimmt dieser Mehrstufenumrichter 22 eine Gleichspannungsleistung aus der zweiten Abgangsleitung 14 auf. Hierdurch wird ein Gleichspannungslastfluss in der zweiten Abgangsleitung 14 verringert. Die aufgenommene Gleichspannungsleistung entspricht dabei einem Produkt aus einer Stromstärke des durch zweite Abgangsleitung 14 fließenden Gleichstroms I_{DC,2} und der vom Mehrstufenumrichter 22 der zweiten Abgangsleitung 14 erzeugten Gleichspannung U_{DC,2}. Da der Mehrstufenumrichter 22 der zweiten Abgangsleitung 14 außerdem einen Wechselspannungsabfall U_{AC} entgegen der Flussrichtung des Kreisstroms I_{AC} erzeugt, gibt der Mehrstufenumrichter 22 der zweiten Abgangsleitung 14 eine Wechselspannungsleistung in die zweite Abgangsleitung 14 ab. Die abgegebene Wechselspannungsleistung entspricht einem Produkt aus einer Stromstärke des Kreisstroms I_{AC} und der vom Mehrstufenumrichter 22 der zweiten Abgangsleitung 14 erzeugten Wechselspannung U_{AC}.

Der Mehrstufenumrichter 18 der ersten Abgangsleitung 12 hingegen gibt eine Gleichspannungsleistung in die erste Abgangsleitung 12 ab, da dieser Mehrstufenumrichter 18 einen Gleichspannungsabfall U_{DC,1} entgegen der Flussrichtung des durch die erste Abgangsleitung 12 fließenden Gleichstroms I_{DC,1} erzeugt. Hierdurch wird ein Gleichspannungslastfluss in der ersten Abgangsleitung 12 erhöht. Die abgegebene Gleichspannungsleistung entspricht einem Produkt aus einer Stromstärke des durch erste Abgangsleitung 12 fließenden Gleichstroms I_{DC,1} und der vom Mehrstufenumrichter 18 der ersten Abgangsleitung 12 erzeugten Gleichspannung U_{DC,1}. Ferner wird die vom Mehrstufenumrichter 22 der zweiten Abgangsleitung 14 abgegebene Wechselspannungsleistung mithilfe des in der ersten Teilmasche 28 zirkulierenden Kreisstroms I_{AC} über die Verbindungsleitung 24 zur ersten Abgangsleitung 12 übertragen. Des Weiteren wird die vom Mehrstufenumrichter 22 der zweiten Abgangsleitung 14 abgegebene Wechselspannungsleistung vom Mehrstufenumrichter 18 der ersten Abgangsleitung 12 aufgenommen, da letztgenannter Mehrstufenumrichter 18 einen Wechselspannungsabfall U_{AC} in Flussrichtung des Kreisstroms I_{AC} erzeugt.

Außerdem ist die vom Mehrstufenumrichter 18 der ersten Abgangsleitung 12 abgegebene Gleichspannungsleistung gleich einem Wirkleistungsanteil der von diesem Mehrstufenumrichter 18 aufgenommenen Wechselspannungsleistung. Ebenso ist ein Wirkleistungsanteil der vom Mehrstufenumrichter 22 der zweiten Abgangsleitung 14 abgegebenen Wechselspannungsleistung gleich der von diesem Mehrstufenumrichter 22 aufgenommenen Gleichspannungsleistung.

Ferner erzeugt der Mehrstufenumrichter 26 der Verbindungsleitung 24 entlang der Verbindungsleitung 24 solch eine Gleichspannung U_{DC,V}, dass ein Gleichstromfluss durch die Verbindungsleitung 24 verhindert wird. Diese Gleichspannung U_{DC,V} entspricht einer Summe aus den Gleichspannungen U_{DC,1}, U_{DC,2}, die von den Mehrstufenumrichtern 18, 22 der Abgangsleitungen 12, 14 erzeugt werden.

Darüber hinaus wird vom Mehrstufenumrichter 32 der ersten Sammelleitung 4 entlang ersten Sammelleitung 4 eine Wechselspannung V_{AC} erzeugt, mittels welcher ein Wechselstromfluss durch die beiden Sammelleitungen 4, 6 verhindert wird. Diese Wechselspannungen V_{AC} weist solch einen Betrag auf, dass eine in Summe zwischen der Gleichspannungsquelle 8 und dem elektrischen Verbraucher 10 abfallende Wechselspannung Null ist - entlang einer beliebigen der beiden Abgangsleitungen 12, 14 betrachtet.

Um die vom Mehrstufenumrichter 18 der ersten Abgangsleitung 12 erzeugte Längsspannung zu verändern, wird eine Anzahl derjenigen Submodule 20 dieses Mehrstufenumrichters 18, die eine Teillängsspannung erzeugen, erhöht oder verringert. Um die vom Mehrstufenumrichter 22 der zweiten Abgangsleitung 14 erzeugte Längsspannung zu verändern, wird analog verfahren.

Neben den beschriebenen Elementen kann das Gleichspannungsnetz 2 weitere, zeichnerisch nicht dargestellte Elemente, wie z.B. mit den Abgangsleitungen 12, 14 verbundene elektrische Verbraucher oder eine Steuereinheit zum Ansteuern der Mehrstufenumrichter, umfassen.

An dieser Stelle sei darauf hingewiesen, dass die zuvor beschriebenen Sammelleitungen 4, 6 und Abgangsleitungen 12, 14 des Gleichspannungsnetzes 2 exemplarisch an dessen Pluspol dargestellt sind. Beide Pole des Gleichspannungsnetzes 2 sind bevorzugter Weise symmetrisch ausgestaltet, sodass das Gleichspannungsnetz 2 an seinem Minuspol entsprechende Sammelleitungen und Abgangsleitungen aufweist, die der Übersichtlichkeit halber figürlich nicht dargestellt.

FIG 2 zeigt ein Prinzipschaltbild einer möglichen Ausgestaltung eines der Submodule 20 aus FIG 1. Beim dargestellten Submodul 20 handelt es sich um ein Vollbrückenmodul 34.

Das Vollbrückenmodul 34 umfasst ein erstes Teilmodul 36 und ein zweites Teilmodul 38, wobei die beiden Teilmodule 36, 38 zueinander parallel geschaltet sind. Jedes dieser beiden Teilmodule 36, 38 umfasst zwei steuerbare Schaltelemente 40, die in Reihe geschaltet sind, sowie zwei Dioden 42, die in Reihe geschaltet sind. Die steuerbaren Schaltelemente 40 sind jeweils als IGBT ausgestaltet.

Eine der beiden Dioden 42 des ersten Teilmoduls 36 ist antiparallel zu einem der beiden Schaltelemente 40 des ersten Teilmoduls 36 geschaltet und die andere der beiden Dioden 42 des ersten Teilmoduls 36 ist antiparallel zum anderen der beiden Schaltelemente 40 des ersten Teilmoduls 36 geschaltet.

In analoger Weise ist eine der beiden Dioden 42 des zweiten Teilmoduls 38 antiparallel zu einem der beiden Schaltelemente 40 des zweiten Teilmoduls 38 geschaltet und die andere der beiden Dioden 42 des zweiten Teilmoduls 38 ist antiparallel zum anderen der beiden Schaltelemente 40 des zweiten Teilmoduls 38 geschaltet.

Weiterhin umfasst das Vollbrückenmodul 34 einen zu seinen beiden Teilmodulen 36, 38 parallel geschalteten Energiespeicher 44. Im vorliegenden Fall ist der Energiespeicher 44 ein Kondensator.

Darüber hinaus weist das Vollbrückenmodul 34 zwei Anschlüsse 46 auf. Einer der beiden Anschlüsse 46 bildet eine Abzweigung zwischen den beiden Schaltelementen 40 bzw. Dioden 42 des ersten Teilmoduls 36 aus. Der andere der beiden Anschlüsse 46 bildet eine Abzweigung zwischen den beiden Schaltelementen 40 bzw. Dioden 42 des zweiten Teilmoduls 38 aus.

FIG 3 zeigt ein Prinzipschaltbild einer alternativen Ausgestaltung eines der Submodule 20 aus FIG 1. Beim dargestellten Submodul 20 handelt es sich um ein Halbbrückenmodul 48.

Das Halbbrückenmodul 48 umfasst zwei steuerbare Schaltelemente 40, die in Reihe geschaltet sind. Die steuerbaren Schaltelementen 40 sind jeweils als IGBT ausgestaltet.

Zudem umfasst das Halbbrückenmodul 48 zwei Dioden 42, die in Reihe geschaltet sind, wobei eine der beiden Dioden 42 antiparallel zu einem der beiden Schaltelemente 40 geschaltet ist und die andere der beiden Dioden 42 antiparallel zum anderen der beiden Schaltelemente 40 geschaltet ist.

Ferner umfasst das Halbbrückenmodul 48 einen Energiespeicher 44, der zur Reihenschaltung der Schaltelemente 40 bzw. zur Reihenschaltung der Dioden 42 parallel geschaltet ist. Auch im vorliegenden Fall ist der Energiespeicher 44 ein Kondensator.

Außerdem weist das Halbbrückenmodul 48 zwei Anschlüsse 46 auf. Einer der beiden Anschlüsse 46 bildet eine Abzweigung zwischen den beiden Schaltelementen 40 bzw. Dioden 42 aus. Der andere der beiden Anschlüsse 46 bildet eine Abzweigung zwischen einem der beiden Schaltelemente 40 und dem Energiespeicher 44 aus.

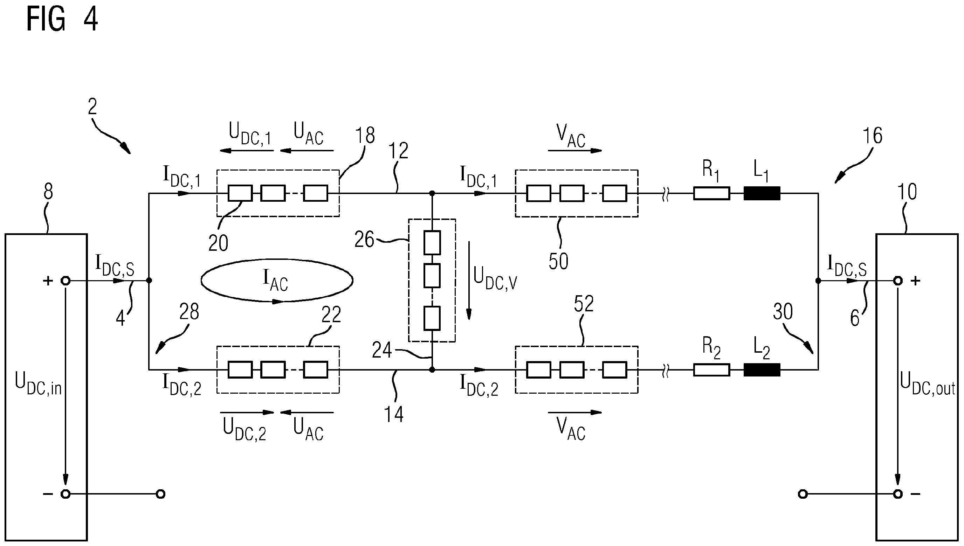

Die Beschreibung der nachfolgenden Ausführungsbeispiele, die im Zusammenhang mit FIG 4 bis FIG 7 diskutiert werden, beschränkt sich jeweils im Wesentlichen auf die Unterschiede zu dem im Zusammenhang mit FIG 1 diskutierten Ausführungsbeispiel, auf das bezüglich gleich bleibender Merkmale und Funktionen verwiesen wird.

Im Wesentlichen gleiche bzw. einander entsprechende Elemente aus unterschiedlichen Figuren sind grundsätzlich mit den gleichen Bezugszeichen bezeichnet und nicht erwähnte Merkmale sind in den folgenden Ausführungsbeispielen übernommen, ohne dass sie erneut beschrieben sind.

FIG 4 zeigt ein Prinzipschaltbild eines anderen Gleichspannungsnetzes 2. Bei diesem Gleichspannungsnetz 2 weist die erste Sammelleitung 4 keinen Mehrstufenumrichter auf. Stattdessen umfasst jede der beiden Abgangsleitungen 12, 14 einen zusätzlichen Mehrstufenumrichter 50, 52 mit jeweils mehreren in Reihe geschalteten Submodulen 20. Diese beiden zusätzlichen Mehrstufenumrichter 50, 52 sind Bestandteile der zweiten Teilmasche 30 des Gleichspannungsnetzes 2.

Der zusätzliche Mehrstufenumrichter 50 der ersten Abgangsleitung 12 erzeugt eine Wechselspannung V_{AC} entlang der ersten Abgangsleitung 12. Analogerweise erzeugt der zusätzliche Mehrstufenumrichter 52 der zweiten Abgangsleitung 14 eine Wechselspannung V_{AC} entlang der zweiten Abgangsleitung 14.

Die von den zusätzlichen Mehrstufenumrichtern 50, 52 erzeugten Wechselspannungen V_{AC} sind den von den anderen Mehrstufenumrichtern 18, 22 der Abgangsleitungen 12, 14 erzeugten Wechselspannungen U_{AC} entgegengerichtet. Zudem weisen die von den zusätzlichen Mehrstufenumrichtern 50, 52 erzeugten Wechselspannungen V_{AC} jeweils solch einen Betrag auf, dass eine in Summe über die gesamte Länge der jeweiligen Abgangsleitung 12, 14 abfallende Wechselspannung Null ist. Dadurch wird ein Wechselstromfluss durch jede der beiden Sammelleitungen 4, 6 verhindert.

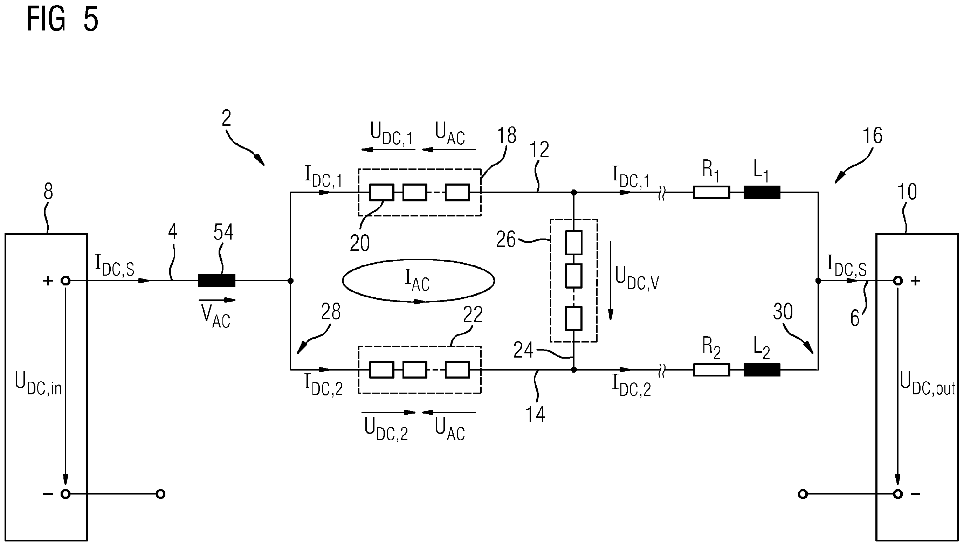

FIG 5 zeigt noch ein anderes Gleichspannungsnetz 2 in einem Prinzipschaltbild. Dieses Gleichspannungsnetz 2 unterscheidet sich vom Gleichspannungsnetz 2 aus FIG 1 dadurch, dass die erste Sammelleitung 4 anstelle eines Mehrstufenumrichters eine Filterdrossel 54 aufweist.

An der Filterdrossel 54 fällt eine Wechselspannung V_{AC} ab, die den von den Mehrstufenumrichtern 18, 22 der Abgangsleitungen 12, 14 erzeugten Wechselspannungen U_{AC} entgegengerichtet ist. Mithilfe der an der Filterdrossel 54 abfallenden Wechselspannung V_{AC} wird eine Stromstärke eines durch die beiden Sammelleitungen 4, 6 fließender Wechselstroms reduziert - verglichen mit einer Stromstärke, die ein durch die beiden Sammelleitungen 4, 6 fließender Wechselstrom ohne die an der Filterdrossel 54 abfallenden Wechselspannung V_{AC} hätte.

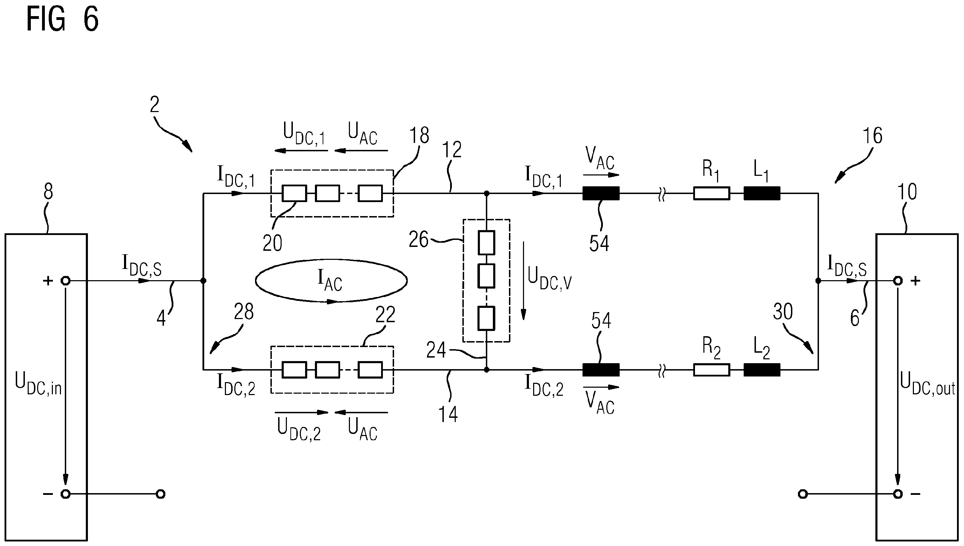

FIG 6 zeigt ein Prinzipschaltbild eines weiteren Gleichspannungsnetzes 2. Dieses Gleichspannungsnetz 2 unterscheidet sich vom Gleichspannungsnetz 2 aus FIG 1 dadurch, dass die erste Sammelleitung 4 keinen Mehrstufenumrichter aufweist. Dafür umfasst jede der beiden Abgangsleitungen 12, 14 eine Filterdrossel 54. Diese beiden Filterdrosseln 54 sind Bestandteile der zweiten Teilmasche 30 des Gleichspannungsnetzes 2.

An jeder der beiden Filterdrosseln 54 fällt eine Wechselspannung V_{AC} ab, die den von den Mehrstufenumrichtern 18, 22 der Abgangsleitungen 12, 14 erzeugten Wechselspannungen U_{AC} entgegengerichtet ist. Die an den Filterdrosseln 54 abfallenden Wechselspannungen V_{AC} bewirken, dass eine Stromstärke eines durch die beiden Sammelleitungen 4, 6 fließender Wechselstroms reduziert wird.

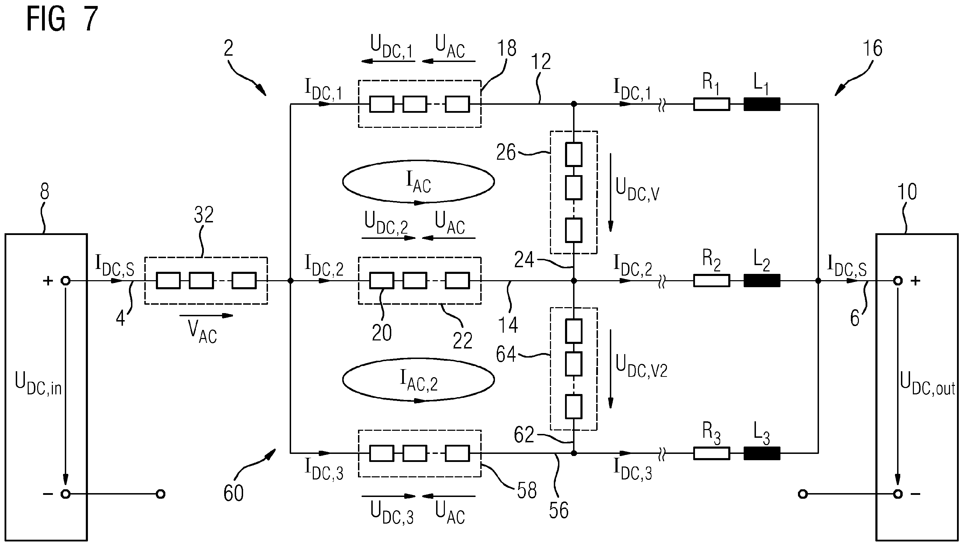

FIG 7 zeigt noch ein weiteres Gleichspannungsnetz 2 in einem Prinzipschaltbild. Dieses Gleichspannungsnetz 2 weist zusätzlich zur ersten und zweiten Abgangsleitung 12, 14 eine dritte Abgangsleitung 56 auf.

Die dritte Abgangsleitung 56 weist einen ohmschem Widerstand R₃ und eine Induktivität L₃ auf. Außerdem umfasst die dritte Abgangsleitung 56 einen Mehrstufenumrichter 58 mit mehreren in Reihe geschalteten Submodulen 20. Ferner ist die dritte Abgangsleitung 56 mit den beiden Sammelleitungen 4, 6 verbunden und bildet zusammen mit der zweiten Abgangsleitung 14 eine zusätzliche Masche 60 aus.

Weiterhin weist das Gleichspannungsnetz 2 eine zusätzliche Verbindungsleitung 62 auf, die einen Mehrstufenumrichter 64 mit einer Reihenschaltung aus mehreren Submodulen 20 umfasst. Diese zusätzliche Verbindungsleitung 62 kann effektiv als Wechselstromkurzschluss aufgefasst werden.

Durch die dritte Abgangsleitung 56 fließt ein Gleichstrom I_{DC,3} in Richtung des elektrischen Verbrauchers 10. Im vorliegenden Fall ist der durch die Sammelleitungen 4, 6 fließende Gleichstrom I_{DC,S} gleich einer Summe aus den durch die einzelnen Abgangsleitungen 12, 14, 56 fließenden Gleichströmen I_{DC,1}, I_{DC,2}, I_{DC,3}.

Des Weiteren erzeugt der Mehrstufenumrichter 58 der dritten Abgangsleitung 56 eine Gleichspannung U_{DC,3}, die in Flussrichtung des durch die dritte Abgangsleitung 56 fließenden Gleichstroms I_{DC,3} gerichtet ist. Hierbei nimmt der Mehrstufenumrichter 58 eine Gleichspannungsleistung aus der dritten Abgangsleitung 56 auf. Auf diese Weise wird ein Gleichspannungslastfluss in der dritten Abgangsleitung 56 verringert.

Außerdem erzeugt der Mehrstufenumrichter 64 der zusätzlichen Verbindungsleitung 62 solch eine Gleichspannung U_{DC,V2}, dass ein Gleichstromfluss durch die zusätzliche Verbindungsleitung 62 verhindert wird. Diese Gleichspannung U_{DC,V2} entspricht einer Differenz aus der vom Mehrstufenumrichter 58 der dritten Abgangsleitung 56 erzeugten Gleichspannung U_{DC,3} und der vom Mehrstufenumrichter 22 der zweiten Abgangsleitung 14 erzeugten Gleichspannung U_{DC,2}.

Ferner wird unter Verwendung des Mehrstufenumrichters 22 der zweiten Abgangsleitung 14 sowie des Mehrstufenumrichters 58 der dritten Abgangsleitung 56 ein weiterer Kreisstrom I_{AC,2} erzeugt, welcher ein Wechselstrom ist. Dieser weitere Kreisstrom I_{AC,2} fließt durch die zusätzliche Verbindungsleitung 62 sowie durch einen Abschnitt der zweiten Abgangsleitung 14 und einen Abschnitt der dritten Abgangsleitung 56.

Darüber hinaus erzeugt der Mehrstufenumrichter 58 der dritten Abgangsleitung 56 eine Wechselspannung U_{AC} entlang der dritten Abgangsleitung 56, die dem weiteren Kreisstrom I_{AC,2} entgegengerichtet ist. Auf diese Weise wird vom Mehrstufenumrichter 58 der dritten Abgangsleitung 56 eine Wechselspannungsleistung in die dritte Abgangsleitung 56 abgegeben. Die vom Mehrstufenumrichter 58 der dritten Abgangsleitung 56 abgegebene Wechselspannungsleistung weist dabei einen Wirkleistungsanteil auf, der so groß ist wie die von diesem Mehrstufenumrichter 58 aus der dritten Abgangsleitung 56 aufgenommene Gleichspannungsleistung.

Des Weiteren sind die vom Mehrstufenumrichter 22 der zweiten Abgangsleitung 14 und vom Mehrstufenumrichter 58 der dritten Abgangsleitung 56 aufgenommenen Gleichspannungsleistungen in Summe so groß wie die vom Mehrstufenumrichter 18 der ersten Abgangsleitung 12 abgegebene Gleichspannungsleistung. Entsprechend sind die Wirkleistungsanteile der vom Mehrstufenumrichter 22 der zweiten Abgangsleitung 14 und vom Mehrstufenumrichter 58 der dritten Abgangsleitung 56 abgegebenen Wechselspannungsleistungen in Summe so groß wie der Wirkleistungsanteil der vom Mehrstufenumrichter 18 der ersten Abgangsleitung 12 aufgenommenen Wechselspannungsleistung.

Grundsätzlich können mit den beiden Sammelleitungen 4, 6 weitere Abgangsleitungen verbunden sein, die weitere Maschen ausbilden.

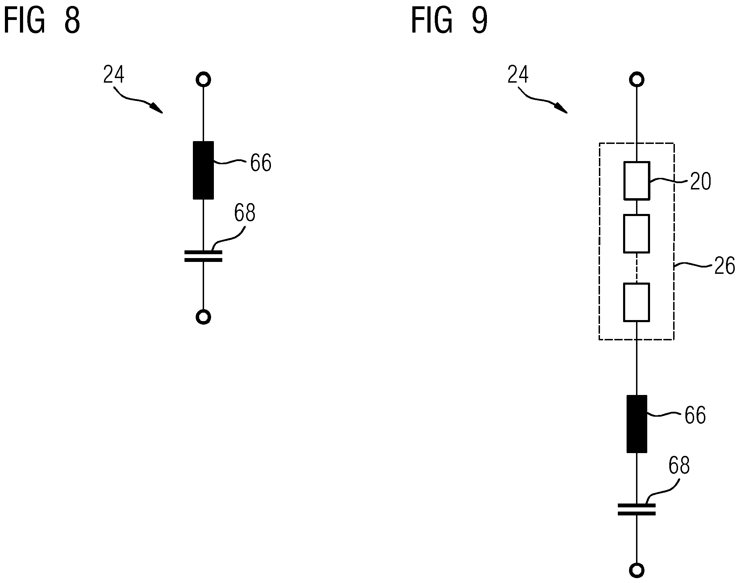

FIG 8 und FIG 9 zeigen jeweils eine alternative Ausgestaltung einer Verbindungsleitung 24 für ein Gleichspannungsnetz 2. Jede dieser beiden alternativen Verbindungsleitungen 24 kann bei einem beliebigen der weiter oben beschriebenen Gleichspannungsnetze 2 anstelle der zuvor beschriebenen Verbindungsleitung bzw. der zusätzlichen Verbindungsleitung verwendet werden.

Die in FIG 8 dargestellte Verbindungsleitung 24 umfasst eine Reihenschaltung aus einer Drosselspule 66 und einem Kondensator 68, welche einen Saugkreis ausbildet.

Dabei ist eine Kapazität des Kondensators 68 und eine Induktivität der Drosselspule 66 derart gewählt, dass eine Resonanzfrequenz des Saugkreises gleich einer Frequenz des Wechselstroms ist, der beim Betrieb des Gleichspannungsnetzes 2 durch die Verbindungsleitung 24 fließt. Ferner liegt beim Betrieb des Gleichspannungsnetzes 2 am Kondensator 68 solch eine Gleichspannung an, dass ein Gleichstromfluss durch die Verbindungsleitung 24 verhindert wird.

Die in FIG 9 dargestellte Verbindungsleitung 24 umfasst eine Reihenschaltung aus einer Drosselspule 66, einem Kondensator 68 und einem Mehrstufenumrichter 26, wobei der Mehrstufenumrichter 26 wiederum eine Reihenschaltung aus mehreren Submodulen 20 umfasst.

Beim Betrieb des Gleichspannungsnetzes 2 erzeugt der Mehrstufenumrichter 26 eine Gleichspannung längs der Verbindungsleitung 24. Diese Gleichspannung bewirkt zusammen mit einer am Kondensator 68 anliegenden Gleichspannung, dass ein Gleichstromfluss durch die Verbindungsleitung 24 verhindert wird. Grundsätzlich ist es auch möglich, zum Verbinden der Abgangsleitungen des Gleichspannungsnetzes 2 eine Verbindungsleitung ähnlich der in FIG 9 dargestellten Verbindungsleitung 24 zu verwenden, bei der jedoch entweder der Kondensator oder die Drosselspule fehlt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung entsprechend der nachfolgenden Ansprüche zu verlassen.

## Patentansprüche

1. Verfahren zum Steuern eines Lastflusses in einem Gleichspannungsnetz (2) mit einer ersten und einer zweiten Sammelleitung (4, 6) und einer ersten und einer zweiten Abgangsleitung (12, 14), wobei die erste und die zweite Abgangsleitung (12, 14) des Gleichspannungsnetzes (2) eine Masche (16) ausbildend jeweils mit der ersten und der zweiten Sammelleitung (4, 6) des Gleichspannungsnetzes (2) verbunden sind,
**dadurch gekennzeichnet, dass**
mittels eines ersten Mehrstufenumrichters (18) eine Längsspannung entlang der ersten Abgangsleitung (12) erzeugt wird, mittels eines zweiten Mehrstufenumrichters (22) eine Längsspannung entlang der zweiten Abgangsleitung (14) erzeugt wird und hierdurch eine elektrische Leistung zwischen den beiden Abgangsleitungen (12, 14) übertragen wird, wobei durch eine Verbindungsleitung (24), durch welche die beiden Abgangsleitungen (12, 14) miteinander verbunden sind, ein Wechselstrom von einer der beiden Abgangsleitungen (12, 14) zur anderen der beiden Abgangsleitungen (12, 14) fließt, wobei die Verbindungsleitung (24) einen dritten Mehrstufenumrichter (26) und/oder einen Energiespeicher aufweist und
wobei der zweite Mehrstufenumrichter (22) eine Gleichspannungsleistung aus der zweiten Abgangsleitung (14) aufnimmt sowie eine Wechselspannungsleistung in die zweite Abgangsleitung (14) abgibt, welche zur ersten Abgangsleitung (12) übertragen wird, und der erste Mehrstufenumrichter (18) die Wechselspannungsleistung aus der ersten Abgangsleitung (12) aufnimmt sowie eine Gleichspannungsleistung in die erste Abgangsleitung (12) abgibt.

2. Verfahren nach Anspruch 1,
**dadurch gekennzeichnet, dass**
die mittels des ersten und zweiten Mehrstufenumrichters (18, 22) erzeugten Längsspannungen jeweils einen Gleichspannungsanteil und einen Wechselspannungsanteil aufweisen.

3. Verfahren nach Anspruch 1 oder 2,
**dadurch gekennzeichnet, dass**
die zwischen den beiden Abgangsleitungen (12, 14) übertragene Leistung eine Wechselspannungsleistung ist.

4. Verfahren nach einem der vorhergehenden Ansprüche,
**dadurch gekennzeichnet, dass**
entlang der Verbindungsleitung (24) solch eine Gleichspannung erzeugt wird, dass ein Gleichstromfluss durch die Verbindungsleitung (24) verhindert wird.

5. Verfahren nach einem der vorhergehenden Ansprüche,
**dadurch gekennzeichnet, dass**
sich jede der beiden Längsspannungen aus einer Überlagerung mehrerer Teillängsspannungen ergibt, die von unterschiedlichen Submodulen (20) des jeweiligen Mehrstufenumrichters (18, 22) erzeugt werden.

6. Verfahren nach einem der vorhergehenden Ansprüche,
**dadurch gekennzeichnet, dass**
eine Veränderung der vom ersten Mehrstufenumrichter (18) erzeugten Längsspannung dadurch erreicht wird, dass verändert wird, wie viele Submodule (20) des ersten Mehrstufenumrichters (18) eine Teillängsspannung erzeugen, aus welcher sich die vom ersten Mehrstufenumrichter (18) erzeugte Längsspannung zusammensetzt.

7. Verfahren nach einem der vorhergehenden Ansprüche,
**dadurch gekennzeichnet, dass**
mittels einer Filterdrossel (54) eine Stromstärke eines durch eine der Sammelleitungen (4, 6) fließenden Wechselstroms reduziert wird und/oder von einem weiteren Mehrstufenumrichter (32, 50, 52) eine Wechselspannung erzeugt wird, mittels welcher ein Wechselstromfluss durch eine der Sammelleitungen (4, 6) verhindert wird.

8. Gleichspannungsnetz (2) mit einer ersten und einer zweiten Sammelleitung (4, 6) und einer ersten und einer zweiten Abgangsleitung (12, 14), wobei die erste und die zweite Abgangsleitung (12, 14) eine Masche (16) ausbildend jeweils mit der ersten und der zweiten Sammelleitung (4, 6) verbunden sind und die erste und die zweite Abgangsleitung (12, 14) jeweils einen Stromrichter zum Erzeugen einer Längsspannung umfassen, wobei die erste und die zweite Abgangsleitung (12, 14) durch eine Verbindungsleitung (24) miteinander verbunden sind,
**dadurch gekennzeichnet dass**,
die Stromrichter der Abgangsleitungen (12, 14) Mehrstufenumrichter (18, 22) sind, und die Verbindungsleitung (24) einen dritten Mehrstufenumrichter (26) und/oder einen Energiespeicher aufweist, wobei die Verbindungsleitung (24) dazu eingerichtet ist, einen Wechselstrom von einer der beiden Abgangsleitungen (12, 14) zu der anderen der beiden Abgangsleitungen (12, 14) zu leiten und einen Gleichstromfluss zwischen den beiden Abgangsleitungen (12, 14) zu verhindern.

9. Gleichspannungsnetz (2) nach Anspruch 8,
**dadurch gekennzeichnet, dass**
die Mehrstufenumrichter (18, 22) jeweils mehrere in Reihe geschaltete Submodule (20) umfassen und jedes der Submodule (20) einen Energiespeicher (44), insbesondere einen Kondensator, zumindest zwei in Reihe geschaltete steuerbare Schaltelemente (40) sowie zumindest zwei Dioden (42), von denen jede antiparallel zu einem der steuerbaren Schaltelemente (40) geschaltet ist, aufweist, wobei die Submodule (20) jeweils als Vollbrückenmodul (34) oder als Halbbrückenmodul (48) ausgestaltet sind.

10. Gleichspannungsnetz (2) nach Anspruch 8 oder 9,
**dadurch gekennzeichnet, dass**
die Verbindungsleitung (24) eine Reihenschaltung aus einem Kondensator (68) und einer Drosselspule (66) umfasst.

11. Gleichspannungsnetz (2) nach einem der Ansprüche 8 bis 10,
**dadurch gekennzeichnet, dass**
der dritte Mehrstufenumrichter (26) mehrere in Reihe geschaltete Submodule (20) aufweist.

12. Gleichspannungsnetz (2) nach einem der Ansprüche 8 bis 11,
**dadurch gekennzeichnet, dass**
jede der beiden Abgangsleitungen (12, 14) eine Filterdrossel (54) und/oder einen zusätzlichen Mehrstufenumrichter (50, 52) mit mehreren in Reihe geschalteten Submodulen (20) umfasst.

13. Gleichspannungsnetz (2) nach einem der Ansprüche 8 bis 12,
**dadurch gekennzeichnet, dass**
eine der beiden Sammelleitungen (4 ,6) eine Filterdrossel (54) und/oder einen Mehrstufenumrichter (32) mit mehreren in Reihe geschalteten Submodulen (20) umfasst.

## Claims

1. Method for controlling a load flow in a DC voltage system (2) having a first and a second bus (4, 6) and a first and a second outgoing line (12, 14), wherein the first and the second outgoing line (12, 14) of the DC voltage system (2) are respectively connected to the first and to the second bus (4, 6) of the DC voltage system (2) so as to form a mesh (16), **characterized in that**
a longitudinal voltage is generated along the first outgoing line (12) by means of a first multilevel converter (18), a longitudinal voltage is generated along the second outgoing line (14) by means of a second multilevel converter (22) and, as a result of this, an electrical power is transmitted between the two outgoing lines (12, 14), wherein an alternating current flows from one of the two outgoing lines (12, 14) to the other of the two outgoing lines (12, 14) through a connecting line (24), by way of which the two outgoing lines (12, 14) are connected to one another, wherein the connecting line (24) has a third multilevel converter (26) and/or an energy store and wherein the second multilevel converter (22) takes up a DC voltage power from the second outgoing line (14) and outputs an AC voltage power into the second outgoing line (14), which AC voltage power is transmitted to the first outgoing line (12), and the first multilevel converter (18) takes up the AC voltage power from the first outgoing line (12) and outputs a DC voltage power into the first outgoing line (12).

2. Method according to Claim 1,
**characterized in that**
the longitudinal voltages generated by means of the first and second multilevel converter (18, 22) each have a DC voltage component and an AC voltage component.

3. Method according to Claim 1 or 2,
**characterized in that**
the power transmitted between the two outgoing lines (12, 14) is an AC voltage power.

4. Method according to one of the preceding claims,
**characterized in that**
a DC voltage is generated along the connecting line (24) such that a flow of direct current through the connecting line (24) is prevented.

5. Method according to one of the preceding claims,
**characterized in that**
each of the two longitudinal voltages results from a superposition of a plurality of partial longitudinal voltages generated by different submodules (20) of the respective multilevel converter (18, 22).

6. Method according to one of the preceding claims,
**characterized in that**
a change in the longitudinal voltage generated by the first multilevel converter (18) is achieved by virtue of the fact that a change is made to how many submodules (20) of the first multilevel converter (18) generate a partial longitudinal voltage of which the longitudinal voltage generated by the first multilevel converter (18) is composed.

7. Method according to one of the preceding claims,
**characterized in that**
a current intensity of an alternating current flowing through one of the buses (4, 6) is reduced by means of a filter inductor (54) and/or an AC voltage is generated by a further multilevel converter (32, 50, 52), said AC voltage being used to prevent a flow of alternating current through one of the buses (4, 6).

8. DC voltage system (2) having a first and a second bus (4, 6) and a first and a second outgoing line (12, 14), wherein the first and the second outgoing line (12, 14) are respectively connected to the first and to the second bus (4, 6) so as to form a mesh (16) and the first and the second outgoing line (12, 14) each comprise a power converter for generating a longitudinal voltage, wherein the first and the second outgoing line (12, 14) are connected to one another by way of a connecting line (24),
**characterized in that**
the power converters of the outgoing lines (12, 14) are multilevel converters (18, 22), and
the connecting line (24) has a third multilevel converter (26) and/or an energy store, wherein the connecting line (24) is configured to conduct an alternating current from one of the two outgoing lines (12, 14) to the other of the two outgoing lines (12, 14) and to prevent a flow of direct current between the two outgoing lines (12, 14).

9. DC voltage system (2) according to Claim 8,
**characterized in that**
the multilevel converters (18, 22) each comprise a plurality of submodules (20) connected in series and each of the submodules (20) has an energy store (44), in particular a capacitor, at least two controllable switching elements (40) connected in series and at least two diodes (42), of which each is connected in antiparallel with one of the controllable switching elements (40), wherein the submodules (20) are each designed as a full-bridge module (34) or as a half-bridge module (48).

10. DC voltage system (2) according to Claim 8 or 9, **characterized in that**
the connecting line (24) comprises a series circuit composed of a capacitor (68) and an inductive coil (66).

11. DC voltage system (2) according to one of Claims 8 to 10, **characterized in that**
the third multilevel converter (26) has a plurality of submodules (20) connected in series.

12. DC voltage system (2) according to one of Claims 8 to 11, **characterized in that**
each of the two outgoing lines (12, 14) comprises a filter inductor (54) and/or an additional multilevel converter (50, 52) having a plurality of submodules (20) connected in series.

13. DC voltage system (2) according to one of Claims 8 to 12, **characterized in that**
one of the two buses (4, 6) comprises a filter inductor (54) and/or a multilevel converter (32) having a plurality of submodules (20) connected in series.

## Revendications

1. Procédé de commande d'un flux de charge dans un réseau (2) à tension continue, ayant une première et une deuxième lignes (4, 6) collectrices et une première et une deuxième lignes (12, 14) de départ, la première et la deuxième lignes (12, 14) de départ du réseau (2) à tension continue sont, en formant une maille (16), reliées respectivement à la première et à la deuxième lignes (4, 6) collectrices du réseau (2) à tension continue,
**caractérisé en ce que**,
au moyen d'un premier convertisseur (18) à plusieurs étages, on produit une composante longitudinale d'une tension, le long de la première ligne (12) de départ au moyen d'un deuxième convertisseur (22) à plusieurs étages, on produit une composante de tension longitudinale, le long de la deuxième ligne (14) de départ et on transmet ainsi une puissance électrique entre les deux lignes (12, 14) de départ, dans lequel par une ligne (24) de liaison, par laquelle les deux lignes (12, 14) de départ sont reliées entre elles, un courant alternatif passe de l'une des deux lignes (12, 14) de départ à l'autre des deux lignes (12, 14) de départ, la ligne (24) de liaison ayant un troisième convertisseur (26) à plusieurs étages et/ou un accumulateur d'énergie et dans lequel le deuxième convertisseur (22) à plusieurs étages reçoit une puissance en tension continue de la deuxième ligne (14) de départ et donne une puissance en tension alternative dans la deuxième ligne (14) de départ, qui est transmise à la première ligne (12) de départ, et le premier convertisseur (18) à plusieurs étages reçoit la puissance en tension alternative de la première ligne (12) de départ ainsi que donne une puissance en tension continue dans la première ligne (12) de départ.

2. Procédé suivant la revendication 1,
**caractérisé en ce que**
les composantes longitudinales de tension, produites au moyen du premier et du deuxième convertisseurs (18, 22) à plusieurs étages, ont chacune une proportion de tension continue et une proportion de tension alternative.

3. Procédé suivant la revendication 1 ou 2,
**caractérisé en ce que**
la puissance transmise entre les deux lignes (12, 14) de départ est une puissance en tension alternative.

4. Procédé suivant l'une des revendications précédentes, **caractérisé en ce que**
l'on produit, le long de la ligne (24) de liaison, une tension continue telle qu'un flux de courant continu dans la ligne (24) de liaison est empêché.

5. Procédé suivant l'une des revendications précédentes, **caractérisé en ce que**
chacune des deux composantes longitudinales de tension proviennent d'une superposition de plusieurs sous-composantes longitudinales de tension, qui sont produites par des sous-modules (20) différents du convertisseur (18, 22) à plusieurs étages respectifs.

6. Procédé suivant l'une des revendications précédentes, **caractérisé en ce que**
l'on obtient une variation de la composante longitudinale de tension produite par le premier convertisseur (18) à plusieurs étages par le fait que l'on fait varier le nombre de sous-modules (20) du premier convertisseur (18) à plusieurs étages, qui produisent une sous-composante longitudinale de tension, dont est composée la composante longitudinale de tension produite par le premier convertisseur (18) à plusieurs étages.

7. Procédé suivant l'une des revendications précédentes, **caractérisé en ce que**,
au moyen d'une bobine (54) de filtrage, on réduit une intensité d'un courant alternatif passant dans l'une des lignes (4, 6) collectrices et/ou on produit par un autre convertisseur (32, 50, 52) à plusieurs étages, une tension alternative, au moyen de laquelle on empêche un flux de courant alternatif de passer dans l'une des lignes (4, 6) collectrices.

8. Réseau (2) à tension continue, comprenant une première et une deuxième lignes (4, 6) collectrices et une première et une deuxième lignes (12, 14) de départ, la première et la deuxième lignes (12, 14) de départ étant, en formant une maille reliée, respectivement, à la première et à la deuxième lignes (4, 6) collectrices, et la première et la deuxième lignes (12, 14) de départ comprenant chacune un convertisseur pour produire une composante longitudinale de tension, la première et la deuxième lignes (12, 14) de départ étant reliées entre elles par une ligne (24) de liaison,
**caractérisé en ce que**
les convertisseurs des lignes (12, 14) de départ sont des convertisseurs (18, 22) à plusieurs étages et la ligne (24) de liaison a un troisième convertisseur (26) à plusieurs étages et/ou un accumulateur d'énergie, dans lequel la ligne (24) de liaison est conçue pour conduire un courant alternatif de l'une des deux lignes (12, 14) de départ à l'autre des deux lignes (12, 14) de départ et pour empêcher un flux de courant continu entre les deux lignes (12, 14) de départ.

9. Réseau (2) à tension continue suivant la revendication 8,
**caractérisé en ce que**
les convertisseurs (18, 22) à plusieurs étages comprennent chacun plusieurs sous-modules (20) montés en série et chacun des sous-modules (20) a un accumulateur (44) d'énergie, notamment un condensateur, au moins deux éléments (40) de commutation pouvant être commandés, qui sont montés en série, ainsi qu'au moins deux diodes (42), dont chacune est montée tête-bêche par rapport à l'un des éléments (40) de commutation qui peuvent être commandés, les sous-modules (20) étant conformés chacun en module (34) à pont complet ou en module (48) en demi-pont.

10. Réseau (2) à tension continue suivant la revendication 8 ou 9,
**caractérisé en ce que**
la ligne (24) de liaison comprend un circuit série composé d'un condensateur (68) et d'une bobine de self (66).

11. Réseau (2) à tension continue suivant l'une des revendications 8 à 10,
**caractérisé en ce que**
le troisième convertisseur (26) à plusieurs étages a plusieurs sous-modules (20) montés en série.

12. Réseau (2) à tension continue suivant l'une des revendications 8 à 11,
**caractérisé en ce que**
chacune des deux lignes (12, 14) de départ comprend une bobine (54) de filtrage et/ou un convertisseur (50, 52) à plusieurs étages supplémentaires ayant plusieurs sous-modules (20) montés en série.

13. Réseau (2) à tension continue suivant l'une des revendications 8 à 12,
**caractérisé en ce que**
l'une des deux lignes (4, 6) collectrices comprend une bobine (54) de filtrage et/ou un convertisseur (32) à plusieurs étages ayant plusieurs sous-modules (20) montés en série.
